# EUROPEAN PATENT SPECIFICATION

(11) **EP 3 351 974 B1**
(45) Date of publication and mention of the grant of the patent: **04.03.2020**
(21) Application number: 18152413.3
(22) Date of filing: 18.01.2018
(51) Int. Cl.: G01V 1/38, G01V 9/00

(54) **GEOCHEMICAL MICROELECTRODE PROBE SYSTEM WITH STATIC PENETRATION**
GEOCHEMISCHES MIKROELEKTRODENSONDENSYSTEM MIT STATISCHER PENETRATION
SYSTÈME DE SONDE DE MICROÉLECTRODE GÉOCHIMIQUE À PÉNÉTRATION STATIQUE

(30) Priority: 18.01.2017 CN 201710036757
(43) Date of publication of application: 25.07.2018
(73) Proprietor: Qingdao Institute Of Marine Geology, Qingdao City, Shandong 266000 (CN)
(72) Inventor: WU, Nengyou, Qingdao City, Shandong (CN); SUN, Zhilei, Qingdao City, Shandong (CN); GUO, Lei, Qingdao City, Shandong (CN); ZHANG, Xilin, Qingdao City, Shandong (CN); WANG, Libo, Qingdao City, Shandong (CN); XU, Cuiling, Qingdao City, Shandong (CN)
(74) Representative: Cabinet Beau de Loménie

(56) References cited:
- WO-A1-2016/023365
- WO-A1-2016/110207
- CN-U- 205 384 247
- KIMINORI SHITASHIMA ET AL: "Strategies for Detection and Monitoring of CO2 Leakage in Sub-seabed CCS", ENERGY PROCEDIA, vol. 37, 1 January 2013 (2013-01-01), pages 4283-4290, XP055478768, NL ISSN: 1876-6102, DOI: 10.1016/j.egypro.2013.06.331

## Description

### BACKGROUND OF THE INVENTION

### Technical Field

The present invention relates to a static cone penetration combined type geochemical microelectrode probe system, belonging to the technical field of marine observation.

### Description of Related Art

Marine resources are an important constitutional part of the national maritime rights and interests. Fighting for resources such as deep-sea petroleum and natural gas hydrates has become an international resource focus. In the process of exploiting seabed natural gas hydrates, the hydrates are spontaneously decomposed due to factors such as the temperature, pressure and external interference to generate various side products such as CH₄, H₂, H₂S and O₂, and may result in serious influences on the stability of the seabed, oceans, engineering infrastructure, oceanic and atmospheric environment. Therefore, effective, comprehensive and long-term monitoring of the exploitation process of the natural gas hydrates has a great significance for promotion on the exploration and exploitation of the hydrate resources and on the investigation and evaluation of the relevant environmental effects.

Long-term in-situ observation methods for the decomposition process of the seabed hydrates currently mainly include Raman probe method, microelectrode probe method, geographic electromagnetism method, earthquake wave method, etc. Obviously, for observation methods of various side products generated during the decomposition process of the hydrates, the chemical index such as the microelectrode probe are most direct and accurate, and followed by the Raman probe, while magnetotelluric means based on the physical geographic detection method is far inferior to the microelectrode probe method in the aspects of no matter precision or accuracy.

Common microelectrode probes include selective membrane microelectrode probes, volt-ampere microelectrode probes, gel resin microelectrode probes, etc., which can apply to detection of respective applicable chemical indexes. For example, the selective membrane microelectrode probes can detect dissolved oxygen, sulfides, pH value, pCO₂, etc.; the volt-ampere microelectrode probes can detect metallic ions such as dissolved Mn²⁺ and Fe²⁺; and the gel resin probes can detect the contents of the soluble heavy metals, concentration of radical ions, and the concentration of light metal elements.

For the decomposition, leak and diffusion process of the seabed natural gas hydrates, a great amount of side products such as CH₄, O₂, pH, H₂, H₂S, NO, NO₂, etc. can be generated and can affect pH and Redox. Finally, an active diffusion field which centers the decomposition source point of the seabed hydrates and have all indexes attenuated gradually from the inside to the outside is formed within the seabed deposits. However, the majority of the microelectrodes detect the chemical index, namely the content, of the seawater or puffy deposits, and even the gel resin probes with the highest structural strength can also detect the seabed deposits with relatively high physical and mechanical strength in a limited way.

The prior art WO 2016/110207 discloses a self-floating sea floor heat flow long-term observation station with static cone penetration probe system. WO 2016/023365 discloses a gravity type pore dynamic penetration device for shallow layer sea-bed soil exploration. CN 205 384 247 discloses a pressure carrier penetration type marine sediment acoustic characteristic in-situ measuring device, comprising outside supporting mechanism, drive mechanism and monitoring penetration testing machine. KIMINORI SHITASHIMA ET AL: "Strategies for Detection and Monitoring of CO2 Leakage in Sub-seabed CCS"

Obviously, if the microelectrode probe group is directly used to detect the various chemical indexes in the process of penetrating into the deposits, the microelectrode probes are very easily damaged, thereby resulting in failure of the long-term observation. How to utilize various chemical microelectrode probes to the maximum extent, fully detecting the various chemical indexes in the deposits while flexibly ensuring the safety of each microelectrode probe is an issue to be solved urgently.

### BRIEF SUMMARY OF THE INVENTION

The objective of the present invention is to provide a static cone penetration combined type geochemical microelectrode probe system which can ensure the depth of penetration into deposits with relatively high strength on the premise of no damage to the probe, thus realizing long-term observation.

The present invention relates to a static cone penetration combined type geochemical microelectrode probe system, comprising a base and a static CPT (Cone Penetration Test) probe and at least one microelectrode that are disposed on the base; the static cone penetration test probe is disposed in the center of the base; at least one microelectrode is arranged around the static cone penetration test probe; and the length of the conical tip of the static cone penetration test probe is 4-8cm greater than the conical tip length of the microelectrode. With the length difference, it is ensured that the static CPT probe touches the deposits with unknown strength first in the process of penetrating the deposits, thus protecting the microelectrode; the length difference should be not too large, to prevent it failing to ensure the penetration depth.

Further, the static cone penetration test probe and the microelectrode may be respectively connected to a main control system; the main control system being configured to complete data acquisition from the static cone penetration test probe and the respective microelectrode, and control whether or not the system penetrates into the deposits according to the conical tip resistance value of the static cone penetration test probe.

The microelectrode may have relatively low mechanical strength. Therefore, in order to prevent damage in the process of penetrating through the deposits, the base of the microelectrode probe system may be equipped with a set of deep-water static CPT probe which is longer than the microelectrode so as to measure the variation of the strength of the deposits while the microelectrode is inserted down. Repeated breaking tests may be carried out on a microelectrode mold to obtain the limiting breaking strength of the respective microelectrode. Providing that the minimum value of the limiting breaking strength of the mechanical structure of the respective microelectrode is S, the threshold value of the static cone penetration test (CPT) can be set according to the value S. The threshold value of the static CPT can be set as 0.7-0.9S. When the conical tip resistance detected by the static CPT probe is greater than or equal to the threshold value of the static CPT, penetration may be stopped to protect the microelectrode from being damaged, thus realizing reliable protection on the microelectrode in the in-situ observation process. The microelectrode group and the static CPT probe can be combined to set the limiting threshold value, thus ensuring penetration depth and device safety.

Further, the static CPT probe may be set a distance of 3-5cm from every microelectrode. If the distance is too small, the static CPT probe will occupy the space of a tested medium, which may affect the measurement result of the microelectrode. If the distance is too large, the effect of microelectrode protection at the detected threshold point will be greatly deducted.

Further, when the number of the microelectrode is greater than 1, the microelectrodes may be uniformly distributed around the static CPT probe.

Further, when the number of the microelectrode is greater than 1, the microelectrodes may be microelectrodes different in static cone penetration index.

Further, the static cone penetration index may be selected from CH₄, O₂, pH, Redox, H₂, H₂S, NO or NO₂.

The present invention can further enhance the response time and resolution of the microelectrode measurement. High-accuracy and high-resolution multi-parameter detection data may be obtained through further improving the signal amplification and data acquisition technologies.

Further, the static cone penetration combined type geochemical microelectrode probe system (hereinafter referred to as microelectrode probe system) may be applied to a long-term seabed-based multi-point in-situ observation system, wherein the long-term seabed-based multi-point in-situ observation system includes a platform frame, a buoyant material, an underwater acoustic communication device, a beacon, a monitoring chamber, a control chamber, a release control chamber, a central revolving table, ballasting weights and the microelectrode probe system; wherein the platform frame has a cylindrical main body with a total of four layers from the top down, the buoyant material, the underwater acoustic communication device and the beacon are installed on the first layer, the monitoring chamber, the control chamber and the release control chamber are installed on the second layer, the central revolving table is installed on the third layer, and the ballasting weights are installed on the fourth layer;
wherein the monitoring chamber on the second layer is internally equipped with an attitude sensor and an depth meter, the control chamber is internally equipped with an underwater control and data acquisition system, the release control chamber is internally equipped with an underwater acoustic releaser;
wherein the central revolving table is installed on the third layer, including a revolving guide rail, a revolving disc, the microelectrode probe system, a expanding mechanism and a lifting mechanism, the central revolving table is provided with the circumferential revolving guide rail, the revolving disc is disposed in the center of the revolving guide rail and is capable of sliding along the revolving guide rail, the revolving disc is driven by a servo motor I; wherein the revolving disc is radially formed with a sliding chute, the microelectrode probe system is capable of sliding in the sliding chute under the control of the expanding mechanism, the expanding mechanism includes a servo motor II and a screw II, the servo motor II drives the screw II to rotate, the screw II is in a threaded connection with a guide sleeve which is fixed on the microelectrode probe system; wherein the microelectrode probe system is capable of moving up and down under the control of the lifting mechanism, the lifting mechanism includes a servo motor III and a screw III, the servo motor III drives the screw III to rotate, and the screw III is in a threaded connection with a base of the microelectrode probe system.

The observation system may be configured to control the revolving disc to rotate through the servo motor, and control the microelectrode probe system to slide through the expanding mechanism, capable of realizing revolving and locating with any radius in a range of 360°, and driving the microelectrode probe system to realize controllable located detection/ sampling.

Further, the platform frame may be made of the 316L stainless steel material.

Much further, in combination with the microelectrode features of high response speed, low stirring sensitivity and high space resolution ratio, a vertical lifting mechanism may be designed with a locating accuracy of 1mm.

Further, the revolving disc may also be provided with a deposit sampler for sampling the observed deposits.

Further, to facilitate installation, the buoyant material may be designed to include 4-8 equal sections, and the combined shape and volume are matched with those of the platform frame. The underwater acoustic releaser may be configured to open rope control hooks, and then ballasting weights can be abandoned. After the ballasting weights are abandoned, the buoyant material can help the platform float on the water surface.

Further, a control system for the long-term seabed-based multi-point in-situ observation system may be provided, comprising a deck unit and an underwater unit (underwater control and data acquisition control system);
wherein the deck unit includes a main console, a data memory I, a human-machine interaction unit, a beacon locating unit, an underwater acoustic communication unit and an acoustic release unit, the main console is respectively connected with the data memory I, the human-machine interaction unit, the beacon locating unit, the underwater acoustic communication unit and the acoustic release unit;
wherein the underwater control and data acquisition system includes the main control system, the beacon, the underwater acoustic communication device, the acoustic releaser, a data memory II, the servo motor I, the revolving disc, the servo motor II, the screw II, the servo motor III, the screw III, the microelectrode probe system, the data acquisition unit, the deposit sampler, the depth meter and the altitude sensor; wherein the main control system is respectively connected with the beacon, the underwater acoustic communication device, the acoustic releaser, the data memory II, the servo motor I, the servo motor II, the servo motor III, the data acquisition unit, the depth meter and the attitude sensor; the servo motor I, the servo motor II and the servo motor III are respectively connected with the revolving disc, the screw II and the screw III to drive the microelectrode probe system and the deposit sampler ; the static cone penetration test probe and eight microelectrodes of the microelectrode probe system are respectively connected with the data acquisition unit;
wherein the beacon locating unit is in a wireless connection with the beacon, the underwater acoustic communication unit is in a wireless connection with the underwater acoustic communication device, and the acoustic release unit is in a wireless connection with the acoustic releaser.

The underwater control and data acquisition system is electrically powered by batteries, and includes two parts, namely software and hardware. The underwater control and data acquisition system may be configured to mainly control the revolving location of the central revolving table, the expanding location and vertical lifting location of the microelectrode probe system and the deposit sampler, acquire data from the detection instruments such as the respective microelectrode, depth meter and altitude sensor, store the acquired data into the data memory II, and at the same time, transmit the data into the deck unit through the underwater acoustic communication device. The underwater acoustic communication device may also transmit parameters such as the underwater state of the platform and the data acquired by the instruments to a deck receiving unit. The acoustic releaser may receive a release signal from the deck unit and then opens hooks such that the hooks are separated from the ballasting weights. Thus, the long-term seabed-based multi-point in-situ observation system may be driven by the buoyant material to float upward to the sea surface. After the long-term seabed-based multi-point in-situ observation system floats on the sea surface, the beacon may send a GPS real-time location to instruct ships on the sea surface to quickly lock the actual location and drifting direction of the long-term seabed-based multi-point in-situ observation system and to smoothly complete tracking and salvage and recovery on the sea level.

The present invention has the following advantages:
1. The static cone penetration test probe and the microelectrode are combined, and the threshold value of the static cone penetration test probe is set according to the limiting breaking strength of the microelectrode, thereby ensuring that the microelectrode stops penetrating the deposits before reaching the limiting breaking strength, and protecting the microelectrode from being damaged. At the same time, the microelectrode is driven to go deeper.
2. The microelectrode probe system can be applied to the long-term seabed-based multi-point in-situ observation system. On the basis of the traditional seabed base, the revolving mechanism and expanding mechanism of the central revolving platform effectively realize the accurate multi-point locating function, then the data of multiple detecting points in a detected zone can be obtained upon demands, and finally the space distribution information of an active diffusion field can be analyzed and obtained. The lifting mechanism is introduced to the central revolving platform, realizing the penetration and pull-out function of the probe, and then the multi-point detection is further developed into three-dimensional detection. Therefore, the planar active diffusion field of the seabed surface is expanded into a three-dimensional active diffusion field, thus ensuring the intuition and reliability of the final result. Important data supports are given to the evaluation on the oceanic environment effects in the process of petroleum leak and hydrate decomposition, thus providing support and services for the implementation of major projects such as seabed petroleum exploitation, and trial exploitation of the natural gas hydrates.

### BRIEF DESCRIPTION OF THE SEVERAL VIEWS OF THE DRAWINGS

FIG. 1 is a structural view of a microelectrode probe system in embodiment 1;
FIG. 2 is a structural view of a long-term seabed-based multi-point in-situ observation system in embodiment 2;
FIG. 3 is a structural view of a central revolving table in embodiment 2;
FIG. 4 is a schematic view of the connection relation between the microelectrode probe system and a expanding mechanism and a lifting mechanism in embodiment 2;
FIG. 5 is a schematic view of the connection relation between the microelectrode probe system and the lifting mechanism in embodiment 2;
FIG. 6 is a schematic view of a control system in embodiment 2;
FIG. 7 is a structural view of the control system in embodiment 2;
FIG. 8 is a schematic view of an active diffusion field detecting method of an observation system in embodiment 2;

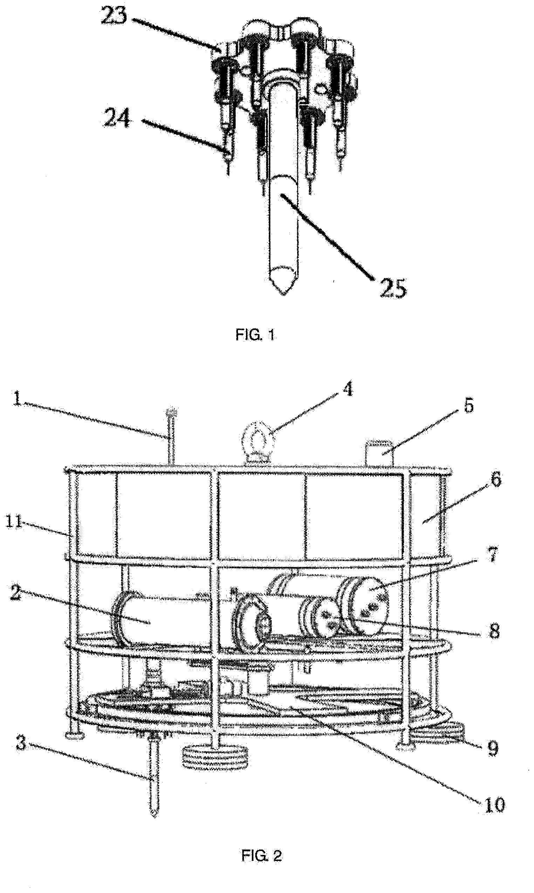

As shown in FIG. 1-8, 1-beacon; 2-monitoring chamber; 3-microelectrode probe system; 4-lifting ring; 5-underwater acoustic communication device; 6-buoyant material; 7-control chamber; 8-release control chamber; 9-ballasting weight; 10-central revolving table; 11-platform frame; 12-servo motor I; 13-servo motor II; 14-servo motor III; 15-revolving guide rail; 16-revolving disc; 17-deposit sampler; 18-deck unit; 19-sea level; 20-long-term seabed-based multi-point in-situ observation system; 21-seabed surface; 22-screw III; 23-base; 24-microelectrode; 25-static CPT probe; 26-screw II; 27-sliding chute; 28-detecting point; 29-detected zone; 30-diffusion field; 31-diffusion point; 32-guide rod; 33-guide hole; 34-guide sleeve; 35-fixing sleeve.

### DETAILED DESCRIPTION OF THE INVENTION

To make the objectives, technical solution and advantages of the present invention more clear, the present invention is described in further detail with reference to the following attached drawings and embodiments.

### Embodiment 1

A microelectrode probe system as shown in FIG. 1 includes a base 23 and a static cone penetration test probe 25 and eight microelectrodes 24 (the number of the microelectrodes can be selected upon the indexes to be actually detected. Eight indexes are taken as an example in this embodiment) that are disposed on the base 23, wherein the indexes respectively detected by the eight microelectrodes 24 include CH₄, O₂, pH, Redox, H₂, H₂S, NO and NO₂. The static cone penetration test probe 25 is disposed in the center of the base 23; the eight microelectrodes 24 are uniformly distributed around the static cone penetration test probe 25; the static cone penetration test probe 25 keeps a distance of 4cm from each one of the microelectrodes 24; and the length of the static cone penetration test probe 25 is 5cm greater than the length of each one of the microelectrodes 24.

The static cone penetration test probe 25 and the eight microelectrodes 24 are respectively connected to the data acquisition unit; the data acquisition unit is connected to the main control system; and the main control system completes the acquisition of data from the static cone penetration test probe 25 and the eight microelectrodes 24.

Repeated destruction tests are carried out on each one of microelectrode molds to obtain the limiting breaking strength of the respective microelectrodes 24 before the microelectrode probe system is assembled. Providing that the minimum value of the limiting breaking strength of the mechanical structure of the respective microelectrode is S, the threshold value of the static cone penetration test (CPT) can be set according to the value S. The threshold value of the static CPT can be set as 0.8S.

In the process that the microelectrode probe penetrates into the deposits, if the conical tip resistance of the static cone penetration test probe reaches 0.8S, the probe stops penetrating immediately, or penetrates into the limiting depth (for example 1m).

### Embodiment 2

The microelectrode probe system in embodiment 1 is applied to a long-term seabed-based multi-point in-situ observation system as shown in FIG. 2. The observation system includes a platform frame 11, a buoyant material 6, an underwater acoustic communication device 5, a beacon 1, a monitoring chamber 2, a control chamber 7, a release control chamber 8, a central revolving table 10, ballasting weights 9 and a microelectrode probe system 3. The platform frame 11 has a cylindrical main body which includes four layers from the top down.

The buoyant material 6, the underwater acoustic communication device 5, the beacon 1 and the lifting ring 4 are installed on the first layer, wherein the buoyant material 6 is designed with six equal sections for facilitating installation and is placed in the frame, and the underwater acoustic communication device 5, the beacon 1 and the lifting ring 4 are all disposed on the top of the platform frame 11.

The monitoring chamber (2), the control chamber (7) and the release control chamber (8) are installed on the second layer. The monitoring chamber (2) is internally equipped with an attitude sensor and an depth meter; the control chamber (7) is internally equipped with an underwater control and data acquisition system; and the release control chamber (8) is internally equipped with an underwater acoustic releaser.

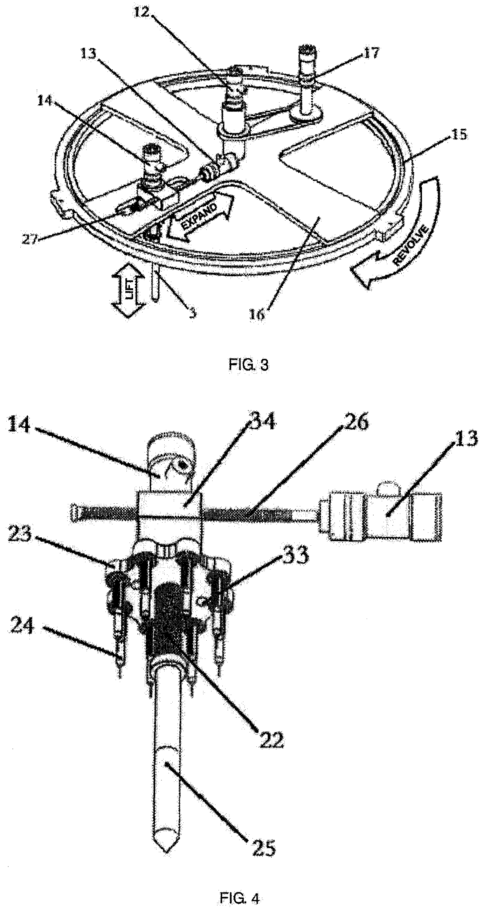

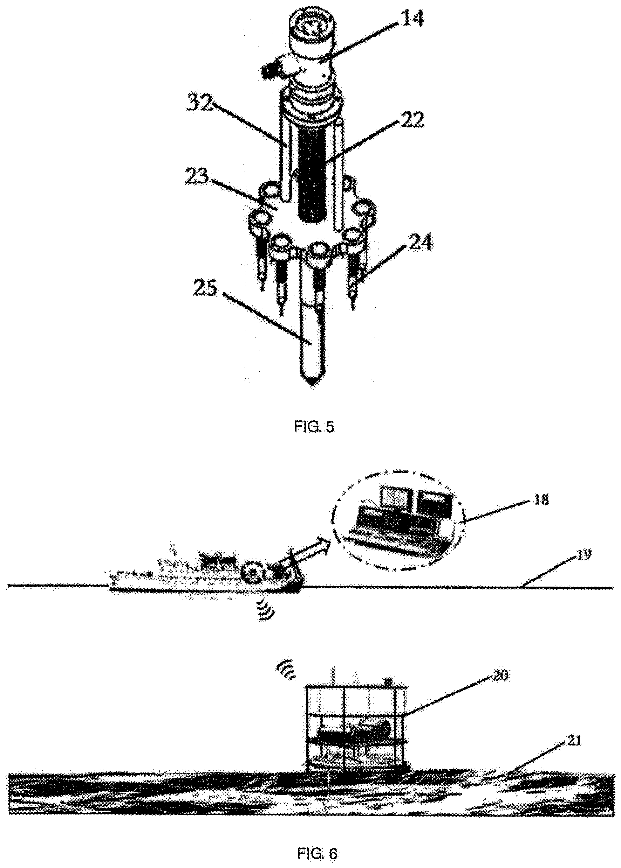

The central revolving table 10 is installed on the third layer, including a revolving guide rail 15, a revolving disc 16, a microelectrode probe system 3, a expanding mechanism and a vertical lifting mechanism (FIG. 3). The central revolving table 10 is provided with a circumferential revolving guide rail 15; the revolving disc 16 is disposed in the center of the revolving guide rail 15 and can slide along the revolving guide rail 15; and the revolving disc 16 is driven by a servo motor I 12. The revolving disc 16 is radially formed with a sliding chute 27. The microelectrode probe system 3 can slide in the sliding chute 27 under the control of the expanding mechanism. The expanding mechanism includes a servo motor II 13 and a screw II 26; the servo motor II 13 drives the screw II 26 to rotate; and the screw II 26 is in a threaded connection with a guide sleeve 34 fixed on the microelectrode probe system 4 (FIG. 4). The microelectrode probe system 3 can vertically move up and down under the control of the lifting mechanism; the lifting mechanism includes a servo motor III 14 and a screw III 22; the servo motor III 14 drives the screw III 22 to rotate; the screw III 22 is in a threaded connection with the base 23; the screw III 22 is connected with the static cone penetration probe 25; the servo motor III 14 is connected with a fixing sleeve 35; the fixing sleeve 35 is fixed with two guide rods 32; and the two guide rods 32 are respectively inserted into guide holes 33 in the base 23 (FIG. 5).

Four pieces of ballasting weights 9 are uniformly installed on the fourth layer.

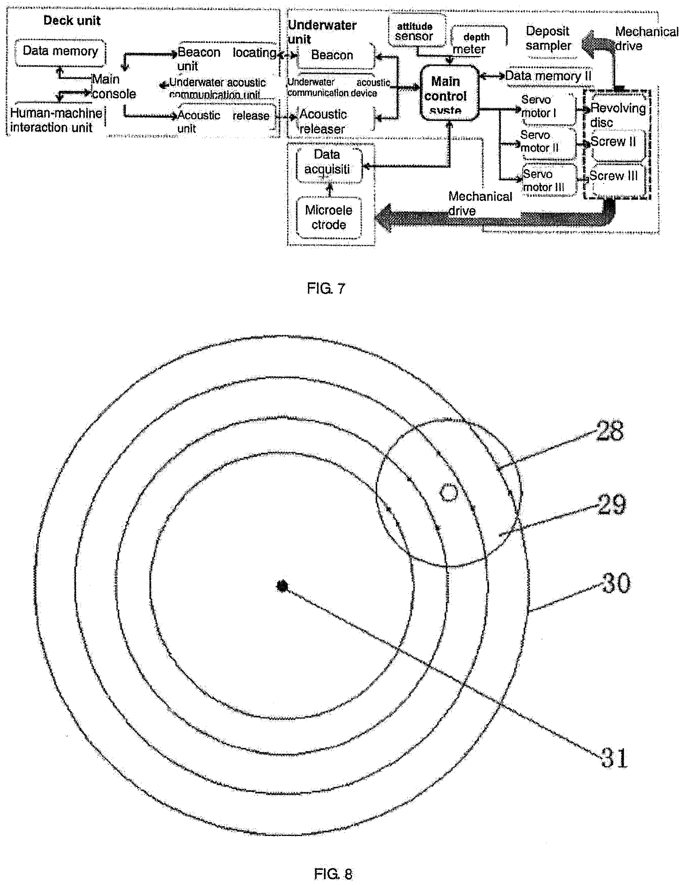

A control system for the long-term seabed-based multi-point in-situ observation system as shown in FIG. 6 and FIG. 7 includes a deck unit 18 and an underwater unit (underwater control and data acquisition control system) 20.

The deck unit 18 includes a main console, a data memory I, a human-machine interaction unit, a beacon locating unit, an underwater acoustic unit and an acoustic release unit, and the main console is respectively connected with the data memory I, the human-machine interaction unit, the beacon locating unit, the underwater acoustic unit and the acoustic release unit.

The underwater control and data acquisition system 20 includes the main control system, the beacon 1, the underwater acoustic communication device 5, the acoustic releaser, a data memory II, the servo motor I 12, the revolving disc 16, the servo motor II 13, the screw II 26, the servo motor III 14, the screw III 22, the microelectrode probe system 3, the data acquisition unit, the deposit sampler 17, the depth meter and the attitude sensor. The main control system is respectively connected with the beacon 1, the underwater acoustic communication device 5, the acoustic releaser, the data memory II, the servo motor I 12, the servo motor II 13, the servo motor III 14, the data acquisition unit, the depth meter and the attitude sensor, wherein the servo motor I 12, the servo motor II 13 and the servo motor III 14 are respectively connected with the revolving disc 16, the screw II 26 and the screw III 22 to drive the microelectrode probe system 3 and the deposit sampler 17; and the static cone penetration test probe 25 and eight microelectrodes 24 of the microelectrode probe system 3 are respectively connected with the data acquisition unit.

The beacon locating unit is in a wireless connection with the beacon 1, the underwater acoustic communication unit is in a wireless connection with the underwater acoustic communication device 5, and the acoustic release unit is in a wireless connection with the acoustic releaser.

The platform frame 11 of the observation system is made of the 316L stainless steel material, with a diameter of 2m. The ship sends the observation system to point where the observation is to be carried out, the acoustic releaser II is suspended from an end of a sheathed cable onboard the ship, and the acoustic releaser II is connected with the lifting ring 4. By releasing the sheathed cable, the observation system is lowered to the seabed surface; then, the acoustic releaser control unit sends a signal to open the hooks and safely separate from the seabed base, thus completing release.

After the underwater observation system is laid in place, an operator sends a command from the deck unit to the main control system of the underwater unit, to enable altitude, height and microelectrode multi-point detection. The revolving of the central revolving table 10, and the expanding and lifting of the microelectrode probe system 3 are respectively controlled through the servo motor I 12, the servo motor II 13 and the servo motor III 14, realizing the revolving location with any radius (0.2m ≤ R ≤ 1m) in a range of 360°, and completing the controllable locating exploration/sampling of the electrode probe system.

The detection method of the active diffusion field can be seen in FIG. 8. The microelectrode probe system 3 of the observation system performs multi-point detection in the detected zone 29 to obtain data of a plurality of detecting points 28. The diffusion field 30 is drawn according to the obtain value, and the location information of the diffusion point 31 is finally obtained.

After the observation is completed, the long-term seabed-based multi-point in-situ observation system 20 is recycled: the acoustic releaser receives the release signal sent by the deck unit 18, opens the hooks, and separates from the ballasting weights 9. Therefore, the long-term seabed-based multi-point in-situ observation system 20 is driven by the buoyant material 6 to float to the sea surface. After the long-term seabed-based multi-point in-situ observation system 20 floats on the sea surface, the beacon 1 sends a GPS real-time location to instruct ships on the seal level to quickly lock the actual location and drifting direction of the long-term seabed-based multi-point in-situ observation system 20 and to smoothly complete tracing and salvage and recovery on the sea surface.

It should be understood that, for those ordinarily skilled in the art, improvements and changes can be made on the basis of the above description, and all the improvements and changes should fall within the protective scope of the Claims of the present invention.

## Claims

1. A static cone penetration combined type geochemical microelectrode probe system, **characterized by** comprising a base (23) and a static cone penetration test probe (25) and at least one microelectrode (24) that are disposed on the base (23); the static cone penetration test probe (25) is disposed in the center of the base (23); at least one microelectrode (24) is arranged around the static cone penetration test probe (25); and the length of the conical tip of the static cone penetration test probe (25) is 4-8cm greater than the conical tip length of the microelectrode (24).

2. The static cone penetration combined type geochemical microelectrode probe system according to claim 1, **characterized in that** the static cone penetration test probe (25) and the microelectrode (24) are respectively connected to a main control system; the main control system is configured to complete data acquisition from the static cone penetration test probe (25) and the respective microelectrode (24), and control whether or not the static cone penetration combined type geochemical microelectrode probe system penetrates into the deposits according to the conical tip resistance value of the static cone penetration test probe (25).

3. The static cone penetration combined type geochemical microelectrode probe system according to any one of claims 1 or 2, **characterized in that** a static cone penetration threshold value of the static cone penetration test probe (25) is set as 0.7-0.9S, and S is the minimum value of the breaking strength of the mechanical structure of the respective microelectrode (24).

4. The static cone penetration combined type geochemical microelectrode probe system according to any one of claims 1-3, **characterized in that** the static cone penetration test probe (25) is set at a distance of 3-5cm from each microelectrode (24).

5. The static cone penetration combined type geochemical microelectrode probe system according to any one of claims 1-4, **characterized in that** the number of microelectrodes (24) is greater than 1, and the microelectrodes (24) are uniformly distributed around the static cone penetration test probe (25).

6. The static cone penetration combined type geochemical microelectrode probe system according to any one of claims 1-5, **characterized in that** when the number of the microelectrode (24) is greater than 1, the microelectrodes (24) are microelectrodes different in static cone penetration indexes.

7. The static cone penetration combined type geochemical microelectrode probe system according to claim 6, **characterized in that** the static cone penetration index is selected one of from CH₄, O₂, pH, Redox, H₂, H₂S, NO or NO₂.

8. A long-term seabed-based multi-point in-situ observation system, comprising a platform frame (11), a buoyant material (6), an underwater acoustic communication device (5), a beacon (1), a monitoring chamber (2), a control chamber (7), a release control chamber (8), a central revolving table (10), ballasting weights (9) and the microelectrode probe system (3) according to any one of claims 1-7; wherein the platform frame (11) has a cylindrical main body with a total of four layers from the top down, the buoyant material (6), the underwater acoustic communication device (5) and the beacon (1) are installed on the first layer, the monitoring chamber (2), the control chamber (7) and the release control chamber (8) are installed on the second layer, the central revolving table (10) is installed on the third layer, and the ballasting weights (9) are installed on the fourth layer;
wherein the monitoring chamber (2) on the second layer is internally equipped with an attitude sensor and a depth meter, the control chamber (7) is internally equipped with an underwater control and data acquisition system, the release control chamber (8) is internally equipped with an underwater acoustic releaser;
wherein the central revolving table (10) is installed on the third layer, comprising a revolving guide rail (15), a revolving disc (16), the microelectrode probe system (3), a expanding mechanism and a lifting mechanism, the central revolving table (10) is provided with the circumferential revolving guide rail (15), the revolving disc (16) is disposed in the center of the revolving guide rail (15) and is capable of sliding along the revolving guide rail (15), the revolving disc (16) is coupled to be driven by a servo motor I (12); wherein the revolving disc (12) is radially formed with a sliding chute (27), the microelectrode probe system (3) is capable of sliding in the sliding chute (27) under the control of the expanding mechanism, the expanding mechanism comprises a servo motor II (13) and a screw II (26), the servo motor II (13) is configured to drive the screw II (26) to rotate, the screw II (26) is in a threaded connection with a guide sleeve (34) which is fixed on the microelectrode probe system (3); wherein the microelectrode probe system (3) is capable of moving up and down under the control of the lifting mechanism, the lifting mechanism comprises a servo motor III (14) and a screw III (22), the servo motor III (14) is configured to drive the screw III (22) to rotate, and the screw III (22) is in a threaded connection with a base (23) of the microelectrode probe system (3).

9. The long-term seabed-based multi-point in-situ observation system according to claim 8, **characterized in that** the revolving disc (16) is also provided with a deposit sampler (17).

10. A control system for a long-term seabed-based multi-point in-situ observation system according to claim 9, **characterized by** comprising a deck unit (18) and an underwater unit (20), wherein the deck unit (18) comprises a main console, a data memory I, a human-machine interaction unit, a beacon locating unit, an underwater acoustic communication unit and an acoustic release unit, the main console is respectively connected with the data memory I, the human-machine interaction unit, the beacon locating unit, the underwater acoustic communication unit and the acoustic release unit;
wherein the underwater unit (20) comprises a main control system, the beacon (1), the underwater acoustic communication device (5), an acoustic releaser, a data memory II, the servo motor I (12), the revolving disc (16), the servo motor II (13), the screw II (26), the servo motor III (14), the screw III (22), the microelectrode probe system (3), a data acquisition unit, the deposit sampler (17), the depth meter and the altitude sensor; wherein the main control system is respectively connected with the beacon (1), the underwater acoustic communication device (5), the acoustic releaser, the data memory II, the servo motor I (12), the servo motor II (13), the servo motor III (14), the data acquisition unit, the depth meter and the altitude sensor; the servo motor I (12), the servo motor II (13) and the servo motor III (14) are respectively connected with the revolving disc (16), the screw II (26) and the screw III (22) to drive the microelectrode probe system (3) and the deposit sampler (17); the static cone penetration test probe (25) and eight microelectrodes (24) of the microelectrode probe system (3) are respectively connected with the data acquisition unit;
wherein the beacon locating unit is in a wireless connection with the beacon (1), the underwater acoustic communication unit is in a wireless connection with the underwater acoustic communication device (5), and the acoustic release unit is in a wireless connection with the acoustic releaser.

## Patentansprüche

1. Kombiniertes geochemisches Mikroelektroden-Einstechsondensystem mit statischem Kegel, **dadurch gekennzeichnet, dass** es eine Basis (23) und eine Einstechprüfsonde (25) mit statischem Kegel und zumindest eine Mikroelektrode (24) umfasst, die an der Basis (23) angeordnet sind, die Einstechprüfsonde (25) mit statischem Kegel in der Mitte der Basis (23) angeordnet ist, zumindest eine Mikroelektrode (24) um die Einstechprüfsonde (25) mit statischem Kegel herum angeordnet ist, und die Länge der konischen Spitze der Einstechprüfsonde (25) mit statischem Kegel 4 - 8 cm größer ist als die Länge der konischen Spitze der Mikroelektrode (24).

2. Kombiniertes geochemisches Mikroelektroden-Einstechsondensystem mit statischem Kegel nach Anspruch 1, **dadurch gekennzeichnet, dass** die Einstechprüfsonde (25) mit statischem Kegel und die Mikroelektrode (24) jeweils mit einem Hauptsteuersystem verbunden sind, das Hauptsteuersystem dazu ausgestaltet ist, eine Datenerfassung von der Einstechprüfsonde (25) mit statischem Kegel und der jeweiligen Mikroelektrode (24) durchzuführen und zu steuern, ob das kombinierte geochemische Mikroelektroden-Einstechsondensystem mit statischem Kegel in die Sedimente in Übereinstimmung mit dem Widerstandswert der konischen Spitze der Einstechprüfsonde (25) mit statischem Kegel eindringt oder nicht.

3. Kombiniertes geochemisches Mikroelektroden-Einstechsondensystem mit statischem Kegel nach einem der Ansprüche 1 oder 2, **dadurch gekennzeichnet, dass** ein Schwellenwert für das Eindringen des statischen Kegels der Einstechprüfsonde (25) mit statischem Kegel auf 0,7 - 0,9 S eingestellt ist, und S der Minimalwert der Bruchfestigkeit der mechanischen Struktur der jeweiligen Mikroelektrode (24) ist.

4. Kombiniertes geochemisches Mikroelektroden-Einstechsondensystem mit statischem Kegel nach einem der Ansprüche 1 - 3, **dadurch gekennzeichnet, dass** die Einstechprüfsonde (25) mit statischem Kegel auf eine Distanz von 3 - 5 cm von jeder Mikroelektrode (24) eingestellt ist.

5. Kombiniertes geochemisches Mikroelektroden-Einstechsondensystem mit statischem Kegel nach einem der Ansprüche 1 - 4, **dadurch gekennzeichnet, dass** die Anzahl von Mikroelektroden (24) größer als 1 ist, und die Mikroelektroden (24) gleichmäßig um die Einstechprüfsonde mit statischem Kegel herum verteilt sind.

6. Kombiniertes geochemisches Mikroelektroden-Einstechsondensystem mit statischem Kegel nach einem der Ansprüche 1 - 5, **dadurch gekennzeichnet, dass**, wenn die Anzahl der Mikroelektroden (24) größer als 1 ist, die Mikroelektroden (24) Mikroelektroden sind, die sich in ihren statischen Kegelpenetrationsindizes unterscheiden.

7. Kombiniertes geochemisches Mikroelektroden-Einstechsondensystem mit statischem Kegel nach Anspruch 6, **dadurch gekennzeichnet, dass** der statische Kegelpenetrationsindex ein aus CH₄, O₂, pH, Redox, H₂, H₂S, NO und NO₂ ausgewählter ist.

8. Langzeit-in-situ-Mehrpunkt-Beobachtungssystem mit Basis auf dem Meeresboden, das einen Plattformrahmen (1), ein schwimmendes Material (6), eine Vorrichtung (5) zur akustischen Unterwasserkommunikation, eine Bake (1), eine Überwachungskammer (2), eine Steuerungskammer (7), eine Auslöse-Steuerungskammer (8), einen zentralen Drehtisch (10), Ballastgewichte (9) und das Mikroelektroden-Sondensystem (3) nach einem der Ansprüche 1 - 7 umfasst, wobei der Plattformrahmen (1) einen zylindrischen Hauptkörper mit insgesamt vier Ebenen von oben nach unten aufweist, das schwimmende Material (6), die Vorrichtung (5) zur akustischen Unterwasserkommunikation und die Bake (1) auf der ersten Ebene installiert sind, die Überwachungskammer (2), die Steuerungskammer (7) und die Auslöse-Steuerungskammer (8) auf der zweiten Ebene installiert sind, der zentrale Drehtisch (10) auf der dritten Ebene installiert ist, und die Ballastgewichte (9) auf der vierten Ebene installiert sind,
wobei die Überwachungskammer (2) auf der zweiten Ebene im Inneren mit einem Lagesensor und einem Tiefenmesser ausgestattet ist, die Steuerungskammer (7) im Inneren mit einem Unterwasser-Steuerungs- und Datenerfassungssystem ausgestattet ist, die Auslöse-Steuerungskammer (8) im Inneren mit einer akustischen Unterwasser-Auslösevorrichtung ausgestattet ist,
wobei der zentrale Drehtisch (10) auf der dritten Ebene installiert ist und eine Drehführungsschiene (15), eine Drehscheibe (16), das Mikroelektroden-Sondensystem (3), einen Ausfahrmechanismus und einen Hubmechanismus umfasst, der zentrale Drehtisch (10) mit der umlaufenden Drehführungsschiene (15) versehen ist, die Drehscheibe (16) in der Mitte der Drehführungsschiene (15) angeordnet ist und in der Lage ist, entlang der Drehführungsschiene (15) zu gleiten, die Drehscheibe (16) so gekoppelt ist, dass sie von einem Servomotor I (12) angetrieben wird, wobei die Drehscheibe (12) radial mit einer Gleitbahn (27) ausgebildet ist, das Mikroelektroden-Sondensystem (3) in der Lage ist, in der Gleitbahn (27) unter der Steuerung des Ausfahrmechanismus zu gleiten, der Ausfahrmechanismus einen Servomotor II (13) und eine Spindel II (26) umfasst, der Servomotor II (13) dazu ausgestaltet ist, die Spindel II (26) zur Drehung anzutreiben, und die Spindel II (26) in einer Gewindeverbindung mit einer Führungshülse (34) steht, die an dem Mikroelektroden-Sondensystem (3) fixiert ist, wobei das Mikroelektroden-Sondensystem (3) in der Lage ist, sich unter der Steuerung des Hubmechanismus auf- und abwärts zu bewegen, der Hubmechanismus einen Servomotor III (14) und eine Spindel III (22) umfasst, der Servomotor III (14) dazu ausgestaltet ist, die Spindel III (22) zur Drehung anzutreiben, und die Spindel III (22) in einer Gewindeverbindung mit einer Basis (23) des Mikroelektroden-Sondensystems (3) steht.

9. Langzeit-in-situ-Mehrpunkt-Beobachtungssystem mit Basis auf dem Meeresboden, nach Anspruch 8, **dadurch gekennzeichnet, dass** die Drehscheibe (16) auch mit einer Sedimentbeprobungsvorrichtung (17) versehen ist.

10. Steuersystem für ein Langzeit-in-situ-Mehrpunkt-Beobachtungssystem mit Basis auf dem Meeresboden nach Anspruch 9, **dadurch gekennzeichnet, dass** es eine Deckeinheit (18) und eine Unterwassereinheit (20) umfasst, wobei die Deckeinheit (18) eine Hauptkonsole, einen Datenspeicher I, eine Mensch-Maschine-Interaktionseinheit, eine Bake-Lokalisierungseinheit, eine akustische Unterwasser-Kommunikationseinheit und eine akustische Auslöseeinheit umfasst, die Hauptkonsole jeweils mit dem Datenspeicher I, der Mensch-Maschine-Interaktionseinheit, der Signalfeuer-Lokalisierungseinheit, der akustischen Unterwasser-Kommunikationseinheit und der akustischen Auslöseeinheit verbunden ist,
wobei die Unterwassereinheit (20) ein Hauptsteuersystem, die Bake (1), die Vorrichtung (5) zur akustischen Unterwasserkommunikation, eine akustische Auslösevorrichtung, einen Datenspeicher II, den Servomotor I (12), die Drehscheibe (16), den Servomotor II (13), die Spindel II (26), den Servomotor III (14), die Spindel III (22), das Mikroelektroden-Sondensystem (3), eine Datenerfassungseinheit, die Sedimentbeprobungsvorrichtung (17), den Tiefenmesser und den Lagesensor umfasst, wobei das Hauptsteuersystem jeweils mit der Bake (1), der Vorrichtung (5) zur akustischen Unterwasserkommunikation, der akustischen Auslösevorrichtung, dem Datenspeicher II, dem Servomotor I (12), dem Servomotor II (13), dem Servomotor III (14), der Datenerfassungseinheit, dem Tiefenmesser und dem Lagesensor verbunden ist, der Servomotor I (12), der Servomotor II (13) und der Servomotor III (14) jeweils mit der Drehscheibe (16), der Spindel II (26) und der Spindel III (22) verbunden sind, um das Mikroelektroden-Sondensystem (3) und die Sedimentbeprobungsvorrichtung (17) anzutreiben, die Einstechprüfsonde mit statischem Kegel und acht Mikroelektroden (24) des Mikroelektroden-Sondensystems (3) jeweils mit der Datenerfassungseinheit verbunden sind,
wobei die Bake-Lokalisierungseinheit in einer drahtlosen Verbindung mit der Bake (1) steht, die akustische Unterwasser-Kommunikationseinheit in einer drahtlosen Verbindung mit der Vorrichtung (5) zur akustischen Unterwasserkommunikation steht, und die akustische Auslöseeinheit in einer drahtlosen Verbindung mit der akustischen Auslösevorrichtung steht.

## Revendications

1. Système combiné de sonde géochimique à microélectrodes et à cône statique de pénétration, **caractérisé en ce qu'**il comprend une base (23) et une sonde de test à cône statique de pénétration (25) et au moins une microélectrode (24) qui sont disposées sur la base (23) ; la sonde de test à cône statique de pénétration (25) est disposée au centre de la base (23) ; au moins une microélectrode (24) est agencée autour de la sonde de test à cône statique de pénétration (25) ; et la longueur de l'extrémité conique de la sonde de test à cône statique de pénétration (25) est plus grande de 4 à 8 cm que la longueur de l'extrémité conique de la microélectrode (24).

2. Système combiné de sonde géochimique à microélectrodes et à cône statique de pénétration selon la revendication 1, **caractérisé en ce que** la sonde de test à cône statique de pénétration (25) et la microélectrode (24) sont respectivement connectées à un système de commande principal ; le système de commande principal est configuré pour effectuer l'acquisition de données à partir de la sonde de test à cône statique de pénétration (25) et de la microélectrode (24) respective, et contrôler si, oui ou non, le Système combiné de sonde géochimique à microélectrodes et à cône statique de pénétration pénètre dans les dépôts conformément à la valeur de résistance d'extrémité conique de la sonde de test à cône statique de pénétration (25).

3. Système combiné de sonde géochimique à microélectrodes et à cône statique de pénétration selon l'une quelconque des revendications 1 et 2, **caractérisé en ce qu'**une valeur de seuil de pénétration de cône statique de la sonde de test à cône statique de pénétration (25) est établie en tant que 0,7 à 0,9 S, et S est la valeur minimum de la résistance à la rupture de la structure mécanique de la microélectrode (24) respective.

4. Système combiné de sonde géochimique à microélectrodes et à cône statique de pénétration selon l'une quelconque des revendications 1 à 3, **caractérisé en ce que** la sonde de test à cône statique de pénétration (25) est placée à une distance de 3 à 5 cm de chaque microélectrode (24).

5. Système combiné de sonde géochimique à microélectrodes et à cône statique de pénétration selon l'une quelconque des revendications 1 à 4, **caractérisé en ce que** le nombre de microélectrodes (24) est supérieur à 1, et les microélectrodes (24) sont réparties uniformément autour de la sonde de test à cône statique de pénétration (25).

6. Système combiné de sonde géochimique à microélectrodes et à cône statique de pénétration selon l'une quelconque des revendications 1 à 5, **caractérisé en ce que**, lorsque le nombre des microélectrodes (24) est supérieur à 1, les microélectrodes (24) sont des microélectrodes ayant des indices de pénétration de cône statique différents.

7. Système combiné de sonde géochimique à microélectrodes et à cône statique de pénétration selon la revendication 6, **caractérisé en ce que** l'indice de pénétration de cône statique est l'un sélectionné parmi le CH₄, le O₂, le pH, le redox, le H₂, le H₂S, le NO et le NO₂.

8. Système d'observation in-situ multipoint basé sur les fonds marins à long terme, comprenant un cadre de plateforme (11), un matériau pouvant flotter (6), un dispositif de communication acoustique sous-marin (5), une balise (1), une chambre de surveillance (2), une chambre de commande (7), une chambre de commande de libération (8), une table tournante centrale (10), des poids de ballastage (9) et le système de sonde à microélectrodes (3) selon l'une quelconque des revendications 1 à 7 ; dans lequel le cadre de plateforme (11) a un corps principal cylindrique avec un total de quatre couches du haut en bas, le matériau pouvant flotter (6), le dispositif de communication acoustique sous-marin (5) et la balise (1) sont installés sur la première couche, la chambre de surveillance (2), la chambre de commande (7) et la chambre de commande de libération (8) sont installées sur la deuxième couche, la table tournante centrale (10) est installée sur la troisième couche, et les poids de ballastage (9) sont installés sur la quatrième couche ;
dans lequel la chambre de surveillance (2) sur la deuxième couche est équipée intérieurement d'un capteur d'attitude et d'un dispositif de mesure de profondeur, la chambre de commande (7) est équipée intérieurement d'un système de commande et d'acquisition de données sous-marin, la chambre de commande de libération (8) est équipée intérieurement d'un dispositif de libération acoustique sous-marin ;
dans lequel la table tournante centrale (10) est installée sur la troisième couche, comprenant un rail de guidage de révolution (15), un disque tournant (16), le système de sonde à microélectrodes (3), un mécanisme d'expansion et un mécanisme de levage, la table tournante centrale (10) est pourvue du rail de guidage de révolution circonférentiel (15), le disque tournant (16) est disposé au centre du rail de guidage de révolution (15) et est capable de coulisser le long du rail de guidage de révolution (15), le disque tournant (16) est accouplé pour être entraîné par un servomoteur I (12) ; dans lequel le disque tournant (12) est formé radialement avec une goulotte de glissement (27), le système de sonde à microélectrodes (3) est capable de glisser dans la goulotte de glissement (27) sous la commande du mécanisme d'expansion, le mécanisme d'expansion comprend un servomoteur II (13) et une vis II (26), le servomoteur II (13) est configuré pour entraîner la vis II (26) en rotation, la vis II (26) est reliée par vissage à un manchon de guidage (34) qui est fixé sur le système de sonde à microélectrodes (3) ; dans lequel le système de sonde à microélectrodes (3) est capable de se déplacer vers le haut et vers le bas sous la commande du mécanisme de levage, le mécanisme de levage comprend un servomoteur III (14) et une vis III (22), le servomoteur III (14) est configuré pour entraîner la vis III (22) en rotation, et la vis III (22) est reliée par vissage à une base (23) du système de sonde à microélectrodes (3).

9. Système d'observation in-situ multipoint basé sur les fonds marins à long terme selon la revendication 8, **caractérisé en ce que** le disque tournant (16) est également pourvu d'un échantillonneur de dépôt (17).

10. Système de commande pour un système d'observation in-situ multipoint basé sur les fonds marins à long terme selon la revendication 9, **caractérisé en ce qu'**il comprend une unité de pont (18) et une unité sous-marine (20), dans lequel l'unité de pont (18) comprend une console principale, une mémoire de données I, une unité d'interaction homme-machine, une unité de positionnement de balise, une unité de communication acoustique sous-marine et une unité de libération acoustique, la console principale est respectivement connectée à la mémoire de données I, à l'unité d'interaction homme-machine, à l'unité de positionnement de balise, à l'unité de communication acoustique et à l'unité de libération acoustique sous-marine ;
dans lequel l'unité sous-marine (20) comprend un système de commande principal, la balise (1), le dispositif de communication acoustique sous-marin (5), un dispositif de libération acoustique, une mémoire de données II, le servomoteur I (12), le disque tournant (16), le servomoteur II (13), la vis II (26), le servomoteur III (14), la vis III (22), le système de sonde à microélectrodes (3), une unité d'acquisition de données, l'échantillonneur de dépôt (17), le dispositif de mesure de profondeur et le capteur d'altitude ; dans lequel le système de commande principal est respectivement connecté à la balise (1), au dispositif de communication acoustique sous-marin (5), au dispositif de libération acoustique, à la mémoire de données II, au servomoteur I (12), au servomoteur II (13), au servomoteur III (14), à l'unité d'acquisition de données, au dispositif de mesure de profondeur et au capteur d'altitude ; le servomoteur I (12), le servomoteur II (13) et le servomoteur III (14) sont respectivement connectés au disque tournant (16), à la vis II (26) et à la vis III (22) pour entraîner le système de sonde à microélectrodes (3) et l'échantillonneur de dépôt (17) ; la sonde de test à cône statique de pénétration (25) et huit microélectrodes (24) du système de sonde à microélectrodes (3) sont respectivement connectées à l'unité d'acquisition de données ;
dans lequel l'unité de positionnement de balise est en liaison sans fil avec la balise (1), l'unité de communication acoustique sous-marine est en liaison sans fil avec le dispositif de communication acoustique sous-marin (5), et l'unité de libération acoustique est en liaison sans fil avec le dispositif de libération acoustique.
